# EUROPÄISCHE PATENTSCHRIFT

(11) **EP 0 505 367 B1**
(45) Veröffentlichungstag und Bekanntmachung des Hinweises auf die Patenterteilung: **11.01.1995**
(21) Anmeldenummer: 90915762.0
(22) Anmeldetag: 19.09.1990
(51) Int. Cl.: B65D 71/72

(54) **PAPPSTEIGE FÜR ZYLINDERARTIGE PACKUNGEN**
CARDBOARD TRAY FOR CYLINDRICAL PACKAGES
PLATEAU EN CARTON POUR EMBALLAGES CYLINDRIQUES

(43) Veröffentlichungstag der Anmeldung: 30.09.1992
(73) Patentinhaber: Eggers, Thies, D-51789 Lindlar (DE)
(72) Erfinder: Eggers, Thies, D-51789 Lindlar (DE)
(74) Vertreter: Hassler, Werner, Dr.
(86) Internationale Anmeldenummer: EP9001592
(87) Internationale Veröffentlichungsnummer: WO9205086

(56) Entgegenhaltungen:
- DE-U- 7 910 187
- DE-U- 8 629 687
- DE-U- 8 905 378

## Beschreibung

### Technisches Gebiet der Erfindung

Die Erfindung betrifft eine Pappsteige für zylinderartige Packungen mit einem Bodenteil parallel zu dessen Längsrändern in Längsreihen ausgerichtete Aufnahmen für Packungen angeordnet sind, wobei benachbarte Längsreihen der Aufnahmen gegeneinander versetzt sind und wobei die Querränder des Bodenteils nach einer Mäanderlinie verlaufen.

### Stand der Technik

Eine Pappsteige der beschriebenen Gattung ist aus DE-U-8 905 378 bekannt. Diese Pappsteige umfaßt ein Bodenteil und ein Oberteil mit jeweils mäanderförmig zugeschnittenen Querrändern. Ein einteiliger Bodenzuschnitt ist nur für gerade Querränder aus der DE-U-7 910 187 bekannt. Damit läßt sich jedoch die Erhöhung der Packungsdichte durch Versetzung der Längsreihen nicht erzielen.

### Zusammenfassung der Erfindung

Aufgabe der Erfindung ist die Bereitstellung einer Pappsteige aus einem Bodenzuschnitt, die eine dichte Packung benachbarter Steigen durch Ineinaderschieben der Mäanderlinien erlaubt.

Diese Aufgabe wird nach der Erfindung dadurch gelöst, daß das Bodenteil angeschnittene, aufgebogene und verbundene Randstege sowohl entlang der Längsränder als auch entlang der nach einer Mäanderlinie verlaufenden Querränder aufweist.

Der erfinderische Schritt wird insbesondere darin gesehen, daß durch die mäanderförmigen Querränder eine Stabilisierung der Pappsteige erreicht wird. Die Mäanderlinien erlauben eine dichte Packung und Verzahnung der Pappsteigen, so daß dadurch die Stapel stabilisiert werden. Die mit der Bodenfläche zusammenhängenden Randstege der Längsränder und Querränder führen zu einer großen Stabilität der Pappsteige.

Im Folgenden ist hauptsächlich von Becherpackungen geschrieben. Darunter werden auch Trinkgefäße für Getränkezubereitungen, Dosen für Getränke, Konserven und andere Lebensmittel oder Gläser und andere Artikel verstanden.

Eine durchgehende Verbindung der Randstege an dem einspringenden Querrand wird dadurch erzielt, daß am einspringenden Teil des Querrandes ein rechtkantiger Einschnitt mit angeschnittenem Abschnitt und am Querrand den Einschnitt überlappende Abschnitte des Randsteges vorgesehen sind.

Zur weiteren Stabilisierung des Bodenteils und zur Vereinfachung der Herstellung ist vorgesehen, daß die Abschnitte der Randstege nach dem Aufbiegen durch überlappende Verbindungen zusammengefügt sind.

Zur Stabilisierung der mäanderförmigen Querränder ist vorgesehen, daß an den senkrecht zu den Längsrändern verlaufenden Abschnitten der Querränder Randstege angeschnitten sind.

Zur Zentrierung und Halterung der Becherpackungen wird vorgeschlagen, daß die Aufnahmen als freigeschnittene und aufgestellte Ansätze des Bodenteils ausgebildet sind.

Eine andere Zentrierung wird dadurch erreicht, daß die Aufnahmen als Ausschnitte in einem Deckzuschnitt ausgebildet sind, der die Randstege des Bodenteils miteinander verbindet.

Die dadurch erreichte Stabilisierung der Becherpackungen innerhalb der Aufnahmen ermöglicht auch die unmittelbare Einstellung der Pappsteigen in ein geneigtes Verkaufsregal. Die Becherpackungen können dann einzeln entnommen werden, ohne daß bei Entnahme einer Becherpackung die Gesamtmenge der Becherpackungen in Unordnung gerät.

Eine besonders vorteilhafte Raumausnutzung erreicht man dadurch, daß benachbarte Längsreihen jeweils um die halbe Teilung der Aufnahmen gegeneinander versetzt sind.

Damit benachbarte Pappsteigen dicht aneinandergestellt werden können, ist vorgesehen, daß die Mäanderlinien der beiden Querränder einer Pappsteige paarig zueinander passend ausgebildet sind.

Zur Erhöhung der Packungsdichte der Becherpackungen ist vorgesehen, daß die Aufnahmen benachbarter Längsreihen in Querrichtung ineinander geschoben sind. Hierdurch kann man die Becherpackungen auf der Pappsteige in möglichst dichter Anordnung unterbringen.

Zur Stabilisierung des Bodenteils und zur einfachen Herstellung der Pappsteige ist vorgesehen, daß die Abschnitte der Randstege nach dem Aufbiegen durch überlappende Verbindungen zusammengefügt sind. Die Verbindung ist vorzugsweise als Klebeverbindung ausgebildet.

Damit auch an den mäanderförmigen Querrändern eine durchgehende Stabilisierung durch Randstege gewährleistet ist, sieht die Erfindung vor, daß an den senkrecht zu den Längsrändern verlaufenden Abschnitten der Querränder Randstege angeschnitten sind.

Die Erfindung ermöglicht durch eine besondere Gestaltung des Zuschnitts auch eine durchgehende Verbindung der Randstege an dem einspringenden Querrand derart, daß am einspringenden Teil des Querrandes ein rechtkantiger Einschnitt mit angeschnittenen Randstegen und am Querrand den Einschnitt überlappende Abschnitte von Randstegen vorgesehen sind.

### Kurzbeschreibung der Zeichnungen

Ausführungsformen der Erfindung werden im folgenden unter Bezugnahme auf die anliegenden Zeichnungen erläutert, in denen darstellen:
Fig. 1 eine Draufsicht auf eine Pappsteige nach der Erfindung,
Fig. 2 eine Seitenansicht zu Fig. 1,
Fig. 3 eine Abwicklung eines Zuschnitts,
Fig. 4 eine aus diesem Zuschnitt geformte Pappsteige mit Aufnahmen in der Draufsicht,
Fig. 5 einen Schnitt zu Fig. 4,
Fig. 6 eine Draufsicht auf eine abgewandelte Pappsteige,
Fig. 7 eine Umklappung zu Fig. 6,
Fig. 8 eine Draufsicht auf eine weitere Ausführungsform einer Pappsteige und
Fig. 9 eine Umklappung zu Fig. 8.

### Ausführungsbeispiele

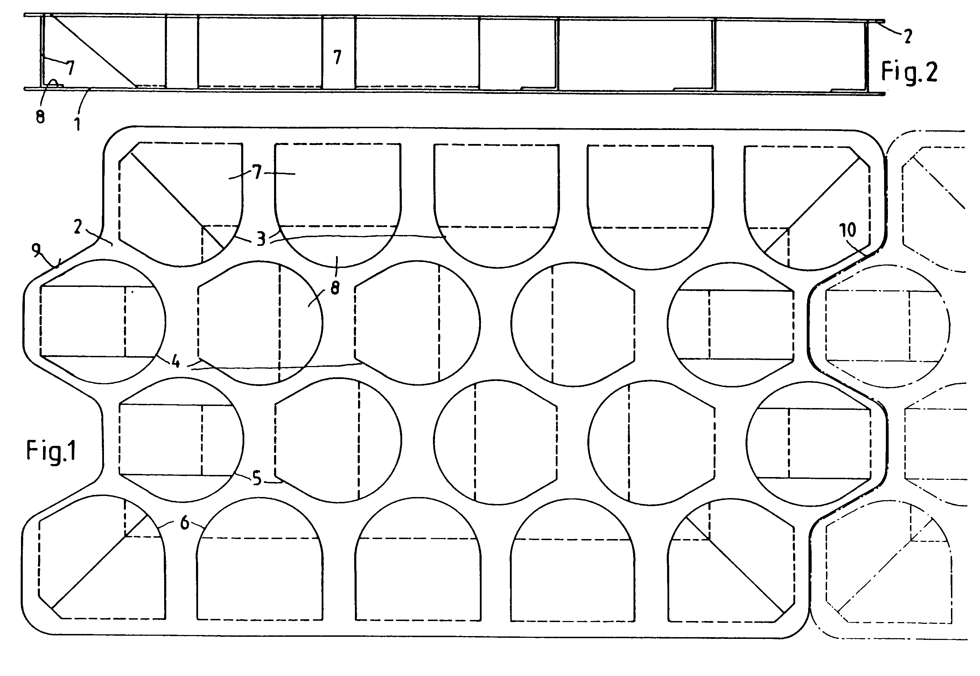

Die Pappsteige nach den Fig. 1 und 2 besteht aus zwei Zuschnitten, nämlich einem Bodenteil 1 und einem Deckzuschnitt 2. Beide Zuschnitte bestehen aus Pappe. Das Bodenteil 1 besteht aus Wellpappe, der Deckzuschnitt 2 aus Vollpappe. Dadurch hat man auch die Möglichkeit, die Pappsteige unterschiedlich, insbesondere farblich oder mit einem entsprechenden Druck zu gestalten.

Fig. 1 zeigt eine Draufsicht auf die Pappsteige. Man erkennt im Deckzuschnitt die zahlreichen Aufnahmen 3, 4, 5, 6 in Form von Ausschnitten für nicht dargestellte Becherpackungen. In Fig. 1 sind die Umrisse der Aufnahmen mit den jeweiligen Trennlinien und vorgebrochenen Faltlinien eingezeichnet. Teile der Freischnitte dienen nach dem Abbiegen als Stützbeine 7 und entsprechende Abschnitte als Klebefüße 8, die auf das Bodenteil geklebt werden, wie man aus Fig. 2 erkennt. Die Stützbeine 7 sind nach der Darstellung der Fig. 1 und 2 in unterschiedlichen Richtungen, also teilweise parallel zu den Längsrändern und teilweise parallel zu den Querrändern angeordnet, um hierdurch die Stabilität der Pappsteige zu erhöhen. Die Figuren zeigen eine Pappsteige für 5 x 4 Becherpackungen. Man kann eine Pappsteige für 4 x 3 Becherpackungen entsprechend ausbilden.

Die Aufnahmen 3 und die Aufnahmen 4 benachbarter Längsreihen sind um den halben Abstand der Mitten der Aufnahmen in Längsrichtung gegeneinander versetzt. In Querrichtung sind die Aufnahmen benachbarter Längsreihen teilweise ineinander geschoben, das heißt, der Abstand der Verbindungslinien der Aufnahmen benachbarter Längsreihen ist kleiner als der Abstand der Mitte von zwei Aufnahmen innerhalb einer Längsreihe. Dadurch ergibt sich eine besonders dichte Anordnung der Aufnahmen und damit eine dichte Anordnung der Becherpackungen auf der Pappsteige. Die Querränder sind als Mäanderlinien 9 ausgebildet, wobei die Mäanderlinien 9 und 10 des rechten und des linken Querrandes paarig zueinander passen, so daß man die Längsränder benachbarter Pappsteigen formschlüssig ineinander schieben kann, wie dies im rechten Teil der Fig. 1 dargestellt ist. Dadurch erhält man eine gegenseitige Verzahnung und Stabilisierung der Pappsteigen innerhalb des Stapels auf einer Transportpalette.

Nach der Erfindung erzielt man eine erhebliche Werkstoffeinsparung, da die Aufnahmen zusammengedrängt angeordnet sind und die Packungsdichte der Becherpackungen erhöht ist. Außerdem ist der Platzbedarf innerhalb des Stapels von Pappsteigen verringert. Bei Anwendung der Erfindung kann man auf einer normüblichen Palette 5 Pappsteigen nach der Erfindung nebeneinander anordnen, gegenüber 4 Pappsteigen nach dem Stand der Technik. Dieses bedeutet eine Erhöhung der Raumausnutzung um 25 Prozent. Eine weitere Erhöhung der Raumausnutzung ergibt sich durch die gegenseitige Versetzung und Verschachtelung. Dadurch wird auch der Platzbedarf innerhalb der Brütkammer und der Kühlkammer sowie der notwendige Transportbedarf herabgesetzt. Dieses erhöht außerordentlich die Wirtschaftlichkeit der Pappsteige nach der Erfindung. Die unterschiedliche Materialauswahl für das Bodenteil und den Deckzuschnitt erlaubt eine Anpassung an die notwendigen Belastungen und verhindert ein Anhaften oder Ankleben des Deckzuschnitts am Deckel von Becherpackungen einer unteren Lage. Durch die Verwendung von Wellpappe für das Bodenteil und durch das Verzahnen an den Querrändern benachbarter Pappsteigen erreicht man eine wesentlich höhere Stabilität und Standfestigkeit des Pappsteigenstapels auf einer Palette. Die Anordnung der Stützfüße in unterschiedlicher Ausrichtung ergibt eine verbesserte Durchlüftung der Palette.

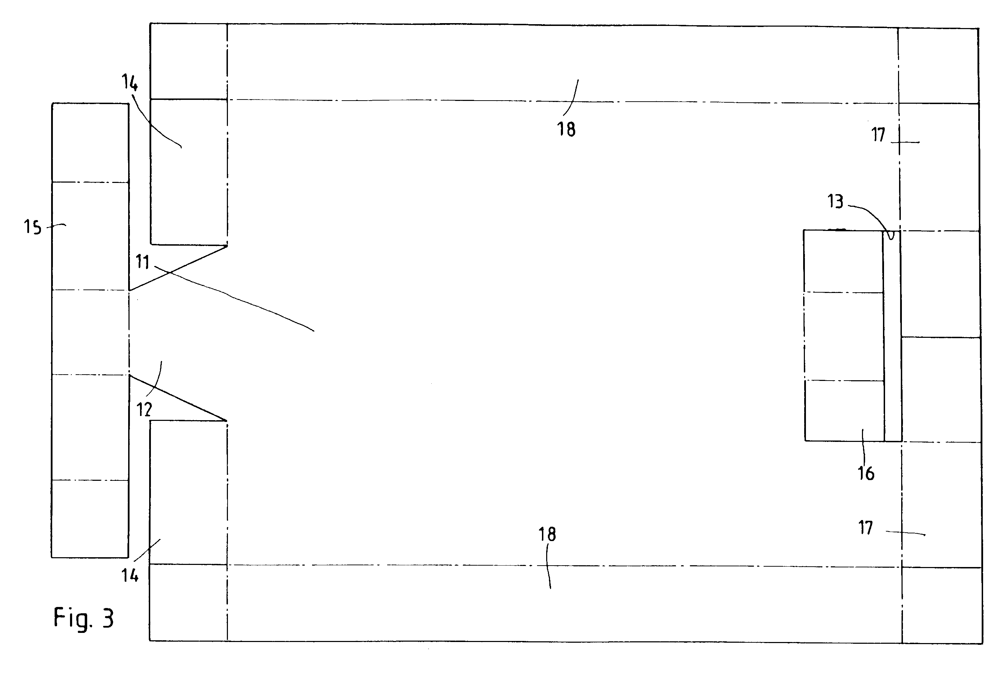

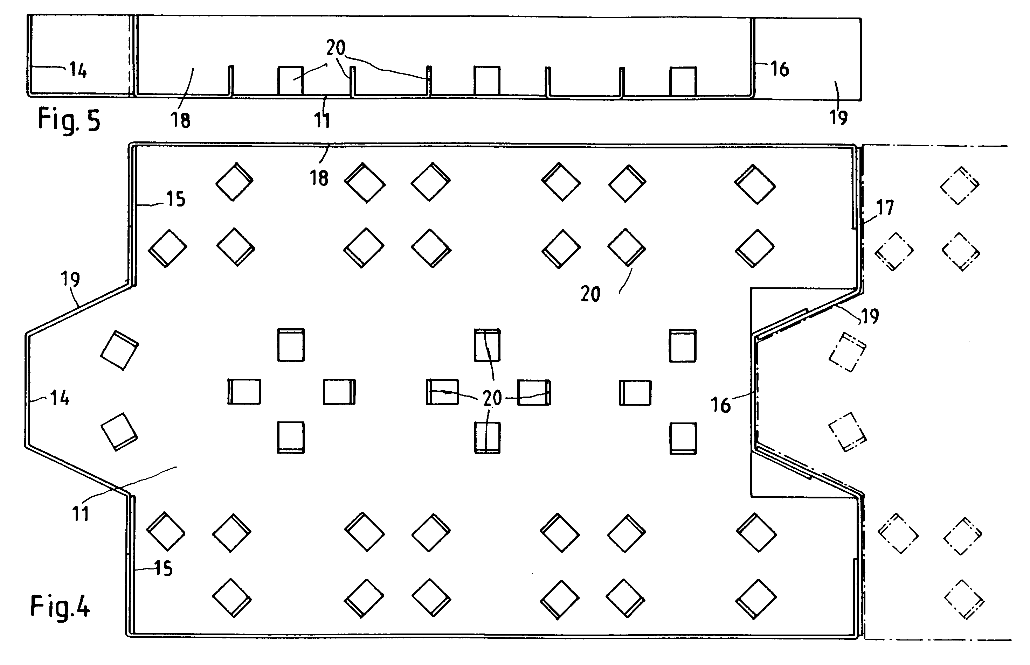

Nach der Erfindung kann man auch eine Pappsteige aus einem Bodenteil mit umlaufenden Randstegen vorsehen. Fig. 3 zeigt die Abwicklung eines entsprechenden Zuschnitts. Das Bodenteil 11 weist an einem Querrand einen trapezförmigen Ansatz 12 auf. Am gegenüberliegenden Querrand ist ein rechtkantiger Einschnitt 13 vorgesehen. Jeweils an den parallel zu den Längsrändern verlaufenden Querrändern sitzen Abschnitte 14, 15, 16, 17 von Randstegen 19. Diese sind teilweise freigeschnitten und vorgebrochen. Auch an den Längsrändern sind Randstege 18 angeschnitten. Die Randstege werden senkrecht aufgestellt und entsprechend den Randlinien der Querränder gefaltet. Dieses ist aus Fig. 4 erkennbar, die das Bodenteil 11 mit umlaufenden Randstegen 18 und 19 zeigt. Die Abschnitte 14 bis 17 sind nach dem Aufstellen überlappend gefaltet und miteinander verklebt. Man erhält so einen außerordentlich stabilen Aufbau des Bodenteils.

Jeweils in drei Längsreihen sind Aufnahmen durch freigeschnittene und aufgestellte lappenartige Ansätze 20 ausgebildet. Diese Ansätze 20 sind an den Boden der jeweiligen Becherpackung angepaßt und ermöglichen das Einstellen von Längsreihen von Becherpackungen. Die Pappsteige nach den Fig. 3 bis 5 ist für drei Reihen von je 4 Becherpackungen ausgebildet. Man erzielt auch hier den gleichen Raumgewinn innerhalb der Pappsteige. Man kann diese Pappsteige in geneigter Anordnung in ein Verkaufsregal einstellen. Die Becherpackungen sind leicht einzeln entnehmbar, ohne daß die verbleibenden Becherpackungen in Unordnung geraten.

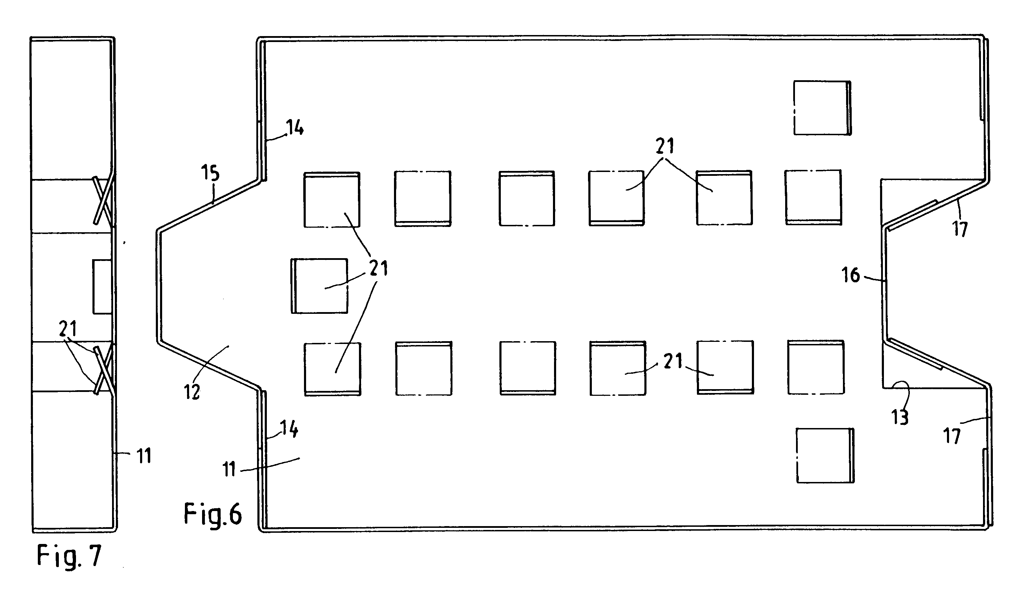

Eine abgewandelte Ausführungsform einer Pappsteige ist in den Fig. 6 und 7 dargestellt. Diese unterscheidet sich von der zuvor beschriebenen Ausführungsform durch die Ansätze 21 für die Aufnahmen. In diesem Fall sind die Ansätze als freigeschnittene und schräg aufgestellte Stege ausgebildet, wie man insbesondere aus Fig. 7 erkennt. Diese Anordnung der Ausschnitte reicht völlig zur Zentrierung und Halterung der Becherpackungen aus.

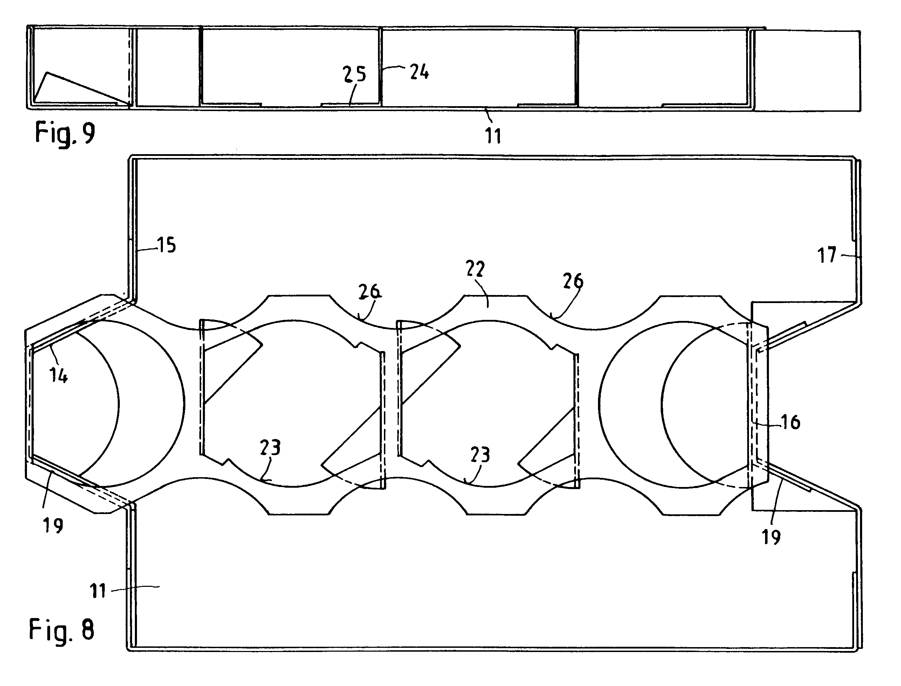

Eine weitere Abwandlung der Erfindung gemäß den Fig. 8 und 9 sieht einen Deckzuschnitt 22 vor, der gegenüberliegende Randstege 19 der Pappsteige verbindet. Der Deckzuschnitt weist Ausschnitte 23 als Aufnahmen aus. In den Ausschnitten 23 sind Stützfüße 24 freigeschnitten und abgebogen. Die Stützfüße sind mit abgebogenen Lappen auf der Bodenwand verklebt. Die Außenkanten des Deckzuschnitts 22 weisen Einschnitte 26 entsprechend der Form der Becherpackungen auf, so daß auch die äußeren Reihen der Becherpackungen durch den Deckzuschnitt 22 zentriert werden.

## Patentansprüche

1. Pappsteige für zylinderartige Packungen mit einem Bodenteil (1, 11), parallel zu dessen Längsrändern in Längsreihen ausgerichtete Aufnahmen (3, 4) für Packungen angeordnet sind, wobei benachbarte Längsreihen der Aufnahmen (3, 4) gegeneinander versetzt sind und wobei die Querränder des Bodenteils (11) nach einer Mäanderlinie (9, 10) verlaufen, dadurch gekennzeichnet, daß das Bodenteil (11) angeschnittene, aufgebogene und verbundene Randstege (18, 19) sowohl entlang der Längsrander als auch entlang der nach einer Mäanderlinie verlaufenden Querränder aufweist.

2. Pappsteige nach Anspruch 1, dadurch gekennzeichnet, daß am einspringenden Teil des Querrandes ein rechtkantiger Einschnitt (13) mit angeschnittenem Abschnitt (16) und am Querrand den Einschnitt (13) überlappende Abschnitte (17) des Randsteges (19) vorgesehen sind.

3. Pappsteige nach Anspruch 1 oder 2, dadurch gekennzeichnet, daß die Abschnitte (14, 15, 16, 17) der Randstege (19) nach dem Aufbiegen durch überlappende Verbindungen zusammengefügt sind.

4. Pappsteige nach Anspruch 3, dadurch gekennzeichnet, daß an den senkrecht zu den Längsrändern verlaufenden Abschnitten der Querränder Randstege angeschnitten sind.

5. Pappsteige nach einem der Ansprüche 1 bis 4, dadurch gekennzeichnet, daß die Aufnahmen als freigeschnittene und aufgestellte Ansätze (20, 21) des Bodenteils (11) ausgebildet sind.

6. Pappsteige nach einem der Ansprüche 1 bis 4, dadurch gekennzeichnet, daß die Aufnahmen als Ausschnitte (23) in einem Deckzuschnitt (22) ausgebildet sind, der die Randstege des Bodenteils miteinander verbindet.

## Claims

1. Cardboard tray for cylindrical packs, having a base part (1, 11), parallel to the longitudinal edges of which receivers (3, 4) for packs aligned in longitudinal rows are arranged, adjacent longitudinal rows of the receivers (3, 4) being offset with respect to one another and the transverse edges of the base part (11) running in the manner of a meandering line (9, 10), characterized in that the base part (11) has cut, bent-up and connected edge webs (18, 19) both along the longitudinal edges and along the transverse edges running in the manner of a meandering line.

2. Cardboard tray according to Claim 1, characterized in that a right-angled incision (13) with cut portion (16) is provided on the inwardly springing part of the transverse edge and portions (17) of the edge web (19) overlapping the incision (13) are provided on the transverse edge.

3. Cardboard tray according to Claim 1 or 2, characterized in that the portions (14, 15, 16, 17) of the edge webs (19) after bending up are joined by overlapping connections.

4. Cardboard tray according to Claim 3, characterized in that edge webs are cut on the portions of the transverse edges running perpendicular to the longitudinal edges.

5. Cardboard tray according to one of Claims 1 to 4, characterized in that the receivers are constructed as freely cut and erected projections (20, 21) of the base part (11).

6. Cardboard tray according to one of Claims 1 to 4, characterized in that the receivers are constructed as cutouts (23) in a top blank (22) which connects the edge webs of the base part to one another.

## Revendications

1. Plateau en carton pour des emballages en genre de cylindre, comportant une partie de fond (1, 11) et des logements (3, 4), pour des emballages, agencés parallèlement aux bords longitudinaux de celle-ci et alignés en des rangées longitudinales, dans lequel des rangées longitudinales voisines de logements (3, 4) sont décalées l'une par rapport à l'autre et dans lequel les bords transversaux de la partie de fond (11) s'étendent suivant une ligne en méandres (9, 10) caractérisé en ce que la partie de fond (11) présente des rebords (18, 19) à pli marqué, pliés et reliés, tant le long des bords longitudinaux qu'également le long des bords transversaux s'étendant suivant une ligne en méandres.

2. Plateau en carton suivant la revendication 1, caractérisé en ce que sont prévues, sur une partie rentrante du bord transversal, une partie découpée rectangulaire (13) avec un tronçon (16) à pli marqué et, sur le bord transversal, des tronçons (17) du rebord (19) qui recouvrent la partie découpée (13).

3. Plateau en carton suivant la revendication 1 ou 2, caractérisé en ce qu'après le pliage les tronçons (14, 15, 16, 17) des rebords (19) sont réunis par des liaisons à recouvrement.

4. Plateau en carton suivant la revendication 3, caractérisé en ce que sur les tronçons, des bords transversaux, qui s'étendent perpendiculairement aux bords longitudinaux sont marqués des plis de rebord.

5. Plateau en carton suivant l'une des revendications 1 à 4, caractérisé en ce que les logements sont réalisés sous la forme de saillies (20, 21) de la partie de fond (11) découpées franchement et dressées.

6. Plateau en carton suivant l'une des revendications 1 à 4, caractérisé en ce que les logements sont réalisés sous la forme de trous découpés (23) dans un flan de recouvrement (22) qui relie l'un à l'autre les rebords de la partie de fond.
